# FASCICULE DE BREVET EUROPEEN

(11) **EP 3 686 093 B1**
(45) Date de publication et mention de la délivrance du brevet: **16.07.2025**
(21) Numéro de dépôt: 20152443.6
(22) Date de dépôt: 17.01.2020
(51) Int. Cl.: B62D 29/00, B62D 25/08, B62D 25/20, B62D 43/04

(54) **STRUCTURE ARRIERE DE VEHICULE AUTOMOBILE EQUIPEE D'UNE STRUCTURE DE SUPPORT D'UN DISPOSITIF DE RETENUE DE ROUE DE SECOURS SOUS PLANCHER**
HECKSTRUKTUR EINES KRAFTFAHRZEUGS, DIE MIT EINER HALTESTRUKTUR EINER ERSATZRADAUFNAHMEVORRICHTUNG UNTER DEM BODEN AUSGESTATTET IST
REAR STRUCTURE OF A MOTOR VEHICLE EQUIPPED WITH A STRUCTURE FOR SUPPORTING A DEVICE FOR RETAINING A SPARE WHEEL UNDER THE FLOOR

(30) Priorité: 25.01.2019 FR 1900670
(43) Date de publication de la demande: 29.07.2020
(73) Titulaire: Renault s.a.s, 92100 Boulogne Billancourt (FR)
(72) Inventeur: KLEIN, Pascal, 60180 Nogent sur Oise (FR); BIGARI, Claire, 78760 Jouars Pontchartrain (FR)
(74) Mandataire: Renault Group

(56) Documents cités:
- WO-A1-2014/131967
- DE-A1- 102013 101 395
- FR-A1- 3 056 548
- US-A- 5 803 533

## Description

L'invention a pour objet une structure arrière de véhicule automobile équipée d'une structure de support d'un dispositif de retenue de roue de secours sous plancher, la structure de support correspondante, ainsi qu'un véhicule équipé de la structure arrière.

Dans certains véhicules, une roue de secours est agencée sous le plancher du véhicule. Ce dernier comporte alors un dispositif de retenue formant un panier qui maintient la roue contre le plancher et qui peut basculer pour permettre l'accès à la roue de secours. Lors d'un choc arrière, il peut arriver que le dispositif de retenue bascule vers le haut ou le bas du côté dirigé vers l'avant du véhicule. Un mouvement de bascule vers le haut peut alors s'avérer problématique dans les véhicules où le réservoir de carburant est situé sous le plancher, en avant du dispositif de retenue de roue de secours : le réservoir de carburant est susceptible d'être détérioré par le dispositif de retenue de roue de secours. Dans ce cas, le réservoir de carburant doit être renforcé ce qui en général complexifie sa réalisation et augmente sa masse et son coût. Le document FR 3 056 548A1 décrit typiquement une structure arrière de véhicule automobile comprenant un plancher ainsi qu'un dispositif de retenue de roue de secours et une structure de support du dispositif de retenue.

Par ailleurs, de plus en plus de véhicules sont équipés de planchers en matériau polymère afin de réduire la masse du véhicule. Ces pièces de relativement grandes dimensions peuvent présenter des zones de faiblesse qu'il faut alors renforcer, notamment pour permettre une fixation sûre et résistante des éléments qui y sont fixés, tels que le dispositif de retenue de roue de secours.

L'invention vise à remédier en tout ou partie à ces inconvénients en proposant une structure de support d'un dispositif de retenue sous plancher d'une roue de secours et une structure arrière de véhicule automobile comportant cette structure de support.

Un premier objet de l'invention concerne une structure arrière de véhicule automobile comprenant un plancher, un dispositif de retenue de roue de secours et une structure de support du dispositif de retenue, cette structure de support définissant un cadre fixé au plancher en plusieurs points de fixation, part exemple quatre, le dispositif de retenue de roue de secours étant fixé uniquement à la structure de support, la structure arrière présentant par ailleurs une direction longitudinale correspondant à la direction longitudinale du véhicule et dont des directions avant et arrière correspondent aux directions avant et arrière du véhicule lorsque la structure arrière est montée sur le véhicule. Notamment, au moins un, en général deux points de fixation de la structure de support sont généralement disposés vers l'avant de la structure arrière, au moins un, en général deux points de fixation étant généralement disposés vers l'arrière de la structure arrière.

Selon l'invention, la structure de support comporte au moins un point de fixation avant au plancher situé en avant d'une partie avant du cadre suivant ladite direction longitudinale.

Un tel agencement permet en cas de choc arrière de limiter une rotation de la structure de support autour du ou des points de fixation avant de la structure au plancher par rapport à une rotation autour du ou des points de fixation arrière de la structure au plancher. De ce fait, la partie arrière de la structure de support tend à remonter et la partie avant à descendre, ce qui permet d'éviter que la structure de support vienne en contact avec un réservoir situé en avant de la structure de support.

Avantageusement, ledit au moins un point de fixation avant au plancher peut comprendre un élément de fixation s'étendant sensiblement perpendiculairement ou perpendiculairement à la partie avant du cadre, cet élément de fixation présentant une extrémité fixée à ladite partie avant du cadre et une autre extrémité fixée au plancher. Ceci permet de réaliser de manière simple et robuste ledit au moins autre point de fixation.

Dans une variante simple à réaliser et robuste, l'élément de fixation peut présenter un élément profilé de renfort s'étendant le long de l'élément de fixation entre ses extrémités et solidaire de ce dernier.

Avantageusement, ledit au moins un point de fixation avant au plancher peut être situé à proximité de l'un des points de fixation de la structure de support. Ceci est plus particulièrement avantageux lorsqu'un élément de renfort est intercalé entre la structure de renfort et le plancher pour la fixation de ce dernier : on peut alors utiliser le même élément de renfort pour un point de fixation usuel de la structure de support et l'au moins un point de fixation avant.

Dans un mode de réalisation, le plancher peut être en matériau polymère, ce qui permet d'alléger la structure arrière.

La structure arrière peut alors comprendre des éléments de structure métalliques auxquels est fixé le plancher. La structure de support est alors fixée au plancher du côté opposé aux éléments de structure métalliques. Avantageusement, en au moins un de ses points de fixation au plancher, la structure de support peut alors être fixée à au moins un des éléments de structure métallique au travers du plancher, par exemple au moyen d'au moins un élément de fixation traversant le plancher. Ceci permet de transmettre les efforts subis par la structure de support aux éléments de structure métalliques et non au plancher, de sorte que ce dernier peut être conçu de manière à présenter une résistance mécanique moindre que si aucune liaison à un élément métallique n'était prévue.

Avantageusement, on peut en outre prévoir au moins un élément de renfort appliqué contre le plancher du côté opposé aux éléments de structure métalliques et présentant au moins une partie fixée à un élément de structure métallique par un élément de fixation traversant le plancher. La structure de support peut alors être fixée au plancher et à un élément de structure métallique par un élément de fixation traversant l'élément de renfort. Une autre partie de l'élément de renfort peut en outre être fixée uniquement au plancher en un point de fixation d'un élément fonctionnel tel qu'un réservoir de liquide ou la structure de support.

Un tel agencement permet ainsi de renforcer la tenue mécanique du plancher en matériau polymère, l'élément de renfort permettant une transmission des efforts reçus par le plancher aux éléments de structure métalliques de la structure arrière. Autrement dit, l'élément de renfort permet de réduire les sollicitations subies par le plancher en matériau polymère.

Avantageusement, ledit au moins un élément de renfort peut être fixé à un élément de structure métallique en au moins un point de fixation du plancher à cet élément de structure métallique. Ceci permet de limiter le nombre de fixations traversant le plancher, autrement dit de limiter le nombre de perforations du plancher, et ainsi d'améliorer la tenue de ce dernier. Avantageusement, tous les points de fixation de l'élément de renfort aux éléments de structure métallique peuvent correspondre à des points de fixation du plancher aux éléments de structure métallique.

Avantageusement, pour davantage de robustesse, l'élément de renfort peut être une pièce métallique, par exemple en acier.

Avantageusement, l'élément de renfort peut être formé d'une unique plaque, notamment métallique, par exemple en acier. L'élément de support peut alors être réalisé de manière simple et robuste, par exemple par emboutissage ou autre.

De manière générale, le dispositif de retenue de roue de secours est fixé à la structure de support, laquelle est fixée au plancher.

Avantageusement, la structure de support peut être formée de profilés, notamment métalliques, reliés les uns aux autres. La structure de support peut alors être réalisée de manière simple et peu coûteuse.

La structure arrière selon l'invention peut en outre comprendre un réservoir, notamment d'urée, fixé au plancher entre le plancher et la structure de support.

Notamment, pour réduire l'encombrement de l'ensemble, une partie du réservoir peut s'étendre à l'intérieur de la structure de support, entre le plancher et le dispositif de retenue fixé à la structure de support. Le réservoir peut par exemple s'étendre à l'intérieur du volume de la jante d'une roue de secours retenue par le dispositif de retenue de roue de secours.

La structure arrière selon l'invention peut comprendre un réservoir, notamment un réservoir de carburant, fixé au plancher en avant de la structure de support.

Un autre objet de l'invention concerne un véhicule automobile comprenant une structure arrière selon l'invention.

L'invention est maintenant décrite en référence aux dessins annexés, non limitatifs, dans lesquels :
[Fig.1] une vue de dessous d'une structure arrière selon un mode de réalisation de l'invention comprenant un plancher, un dispositif de retenue de roue de secours et une structure de support du dispositif de retenue ;
[Fig.2] est une vue de dessous partielle de la structure arrière de la figure 1 sur laquelle le dispositif de retenue de roue de secours n'est pas représenté ;
[Fig.3] est une vue de dessous partielle de la structure arrière de la figure 1 sur laquelle seule la structure de support est visible ;
[Fig.4] est une vue en coupe de la structure arrière selon la ligne A-A de la figure 1 ;
[Fig.5] est un agrandissement de la fixation de la structure de support au plancher.

Dans la présente description, les termes avant, arrière, supérieur, inférieur, font référence aux directions avant et arrière du véhicule, lorsque la structure arrière de véhicule est montée sur le véhicule. Les axes X, Y, Z, correspondent respectivement à l'axe longitudinal (d'avant en arrière), transversal et vertical du véhicule, ce dernier reposant sur le sol. La direction verticale correspond ainsi à la direction de la gravité.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

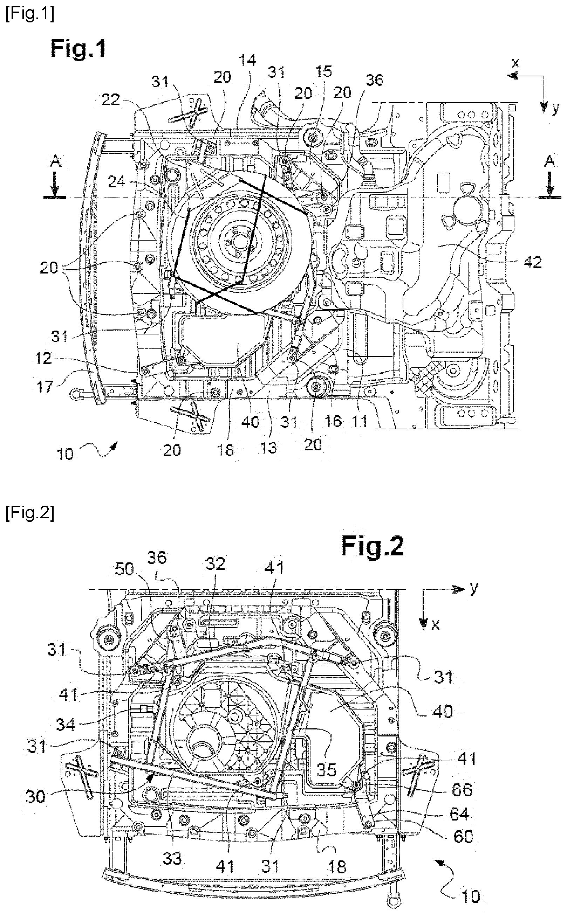

La figure 1 représente une structure arrière 10 de véhicule automobile comprenant des éléments de structure métalliques 11, 12, 13, 14, 15, 16 et un plancher 18, ici en matériau polymère, fixé à ces éléments de structure métalliques 11-16. Dans l'exemple représenté, la structure arrière 10 comprend en outre un élément de structure métallique transverse 17 formant une traverse arrière et s'étendant en arrière du plancher. Dans cet exemple, les deux éléments de structure métalliques 11, 12 sont des éléments transverses avant 11 et arrière 12 respectivement. Les éléments de structure métalliques 13, 14 sont des longerons s'étendant suivant la direction longitudinale du véhicule. Les éléments de structure métalliques 15, 16 sont des longeronnets s'étendant entre les longerons 13, 14 et l'élément transverse 11. Le plancher 18 est disposé sous les éléments de structure métalliques 11-16. Il est fixé à ceux-ci par des vis 20.

Bien entendu, l'invention n'est pas limitée à un agencement particulier des éléments de structure métalliques, ni par la forme de ces derniers et/ou leur disposition et leur nombre.

La structure arrière 10 présente une direction longitudinale correspondant à la direction longitudinale Y du véhicule et dont des directions avant et arrière correspondent aux directions avant et arrière du véhicule lorsque la structure arrière est montée sur le véhicule.

La structure arrière 10 comprend un dispositif de retenue 22 de roue de secours et une structure de support 30 du dispositif de retenue 22. Ces éléments sont situés du côté du plancher 18 opposé aux éléments de structure métalliques. Seul la structure de support 30 est fixée au plancher 18, le dispositif de retenue 22 étant fixé uniquement à la structure de support 30.

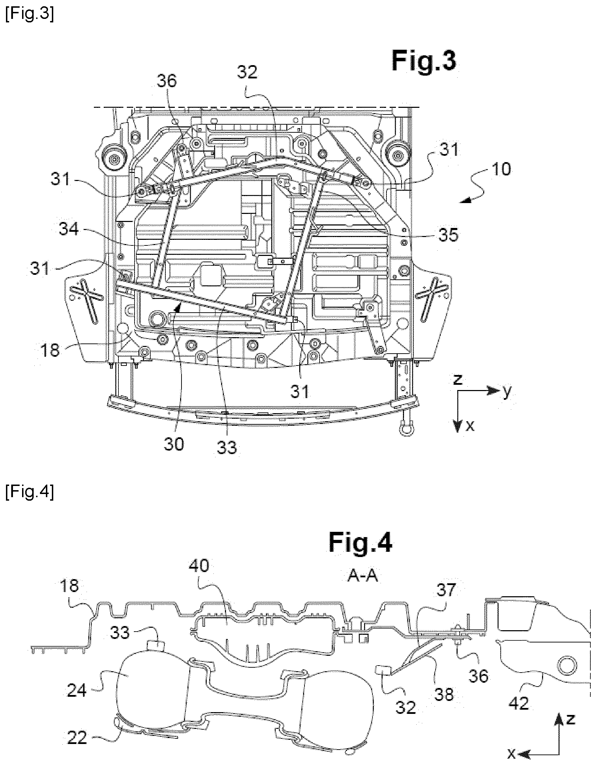

Dans l'exemple représenté, le dispositif de retenue 22 de roue de secours est du type filaire, autrement dit, il est formé en partie de fils, généralement métalliques, assemblés les uns aux autres et définissant un panier de réception d'une roue de secours 24 (voir figures 1 et 4). Lorsqu'il est métallique, le dispositif de retenue 22 peut être fixé par soudure à la structure de support 30. A défaut, des fixations par vis, rivets ou similaires peuvent être prévues.

La structure de support 30 définit un cadre fixé au plancher en quatre points de fixation 31.

Le cadre défini par la structure de support 30 comporte quatre côtés dans l'exemple représenté : un côté avant 32, un côté arrière 33, un côté latéral gauche 34 et un côté latéral droit 35. Dans l'exemple représenté, ces côtés sont formés de profilés, ici creux, reliés les uns aux autres. Il s'agit de préférence de profilés métalliques fixés les uns aux autres par soudure ou par tout autre moyen adapté (vis, rivet, ...). L'invention n'est toutefois pas limitée à ce mode de réalisation, et la structure de support 30 pourrait présenter un nombre différent de côtés et/ou de points de fixation.

Selon l'invention, la structure de support 30 comporte au moins un point de fixation avant 36 au plancher 18, situé en avant d'une partie avant du cadre suivant la direction longitudinale Y, à savoir ici en avant d'une partie du côté avant 32 (voir figures 1 et 3).

Dans l'exemple, un seul point de fixation avant 36 suffit, on pourrait toutefois en prévoir deux, voire plus.

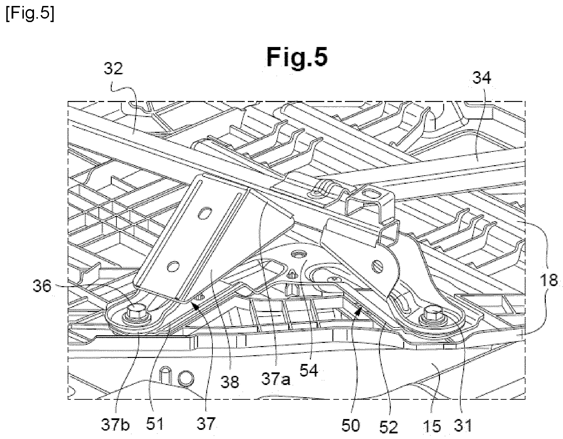

En outre, le point de fixation avant 36 comprend un élément de fixation 37 s'étendant sensiblement perpendiculairement à la partie avant du cadre, cet élément de fixation 37 présentant une extrémité 37a fixée à ladite partie avant du cadre (le côté 32) et une autre extrémité 37b fixée au plancher 18 par une vis 36 (fig.5). Dans la présente description, la référence 36 désigne à la fois le point de fixation avant et l'élément de fixation réalisant cette fixation avant, ici une vis. Cet élément de fixation 37 présente un élément profilé de renfort 38 s'étendant le long de l'élément de fixation 37 entre ses extrémités et solidaire de ce dernier (fig.5). Cet agencement permet d'obtenir de manière simple une fixation robuste, d'autant plus robuste que l'élément de fixation 37 s'étend sensiblement perpendiculairement à la partie de cadre à laquelle il est fixé (voir fig.3).

L'invention n'est toutefois pas limitée à cet agencement, pourvu que le cadre comporte un point de fixation avant au plancher. Cette position particulière permet de bloquer un mouvement vers l'avant et vers le plancher en cas de choc arrière. On favorise ainsi un mouvement de la partie avant de la structure de support vers le bas (le sol).

La structure arrière 10 représentée comprend en outre un élément fonctionnel 40 situé du côté du plancher 18 opposé aux éléments de structure métalliques. Cet élément fonctionnel 40, un réservoir de liquide dans l'exemple, notamment un réservoir d'urée, est fixé au plancher en plusieurs points de fixation 41, par exemple par des vis, tel que visible figure 2. Tel que visible sur les figures 2 et 4, le réservoir 40 est d'abord fixé au plancher 18, puis la structure de support 30 est fixée au plancher, certains de ses côtés passant sous le réservoir 40 (voir fig.2). En outre, une partie du réservoir 40 s'étend à l'intérieur de la structure de support, entre le plancher et le dispositif de retenue fixé à la structure de support (voir fig.2), ce qui permet de réduire l'encombrement général de la structure arrière 10.

La structure arrière 10 représentée sur les figures comprend enfin un autre élément fonctionnel 42 situé du côté du plancher 18 opposé aux éléments de structure métalliques, ici un réservoir de carburant, situé en avant du dispositif de retenue de roue de secours.

Ainsi, du fait du point de fixation avant 36 de la structure de support 30, la partie avant de cette dernière, et donc par conséquent la partie avant du dispositif de retenue qui y est fixé, va descendre vers le sol en cas de choc arrière, réduisant considérablement, voire supprimant, les risques de collision entre le dispositif de retenue de roue de secours et le réservoir de carburant 42.

On notera que dans l'exemple représenté, en au moins un de ses points de fixation au plancher (ici les deux points de fixation 31 avant fixant le côté avant 32 au plancher ainsi qu'un point de fixation 31 arrière gauche fixant le côté arrière 33 au plancher), la structure de support 30 est fixée à un des éléments de structure métallique au travers du plancher 18, ici par des vis 20 traversant le plancher. Ces points de fixation 31 correspondent en outre à des points de fixation usuels du plancher 18 aux éléments de structure métalliques. Ceci permet de limiter le nombre de fixations traversant le plancher, autrement dit de limiter le nombre de perforations du plancher, et ainsi d'améliorer la tenue de ce dernier.

Dans l'exemple représenté, on note également la présence de deux éléments de renfort 50 et 60 (fig.2) appliqués contre le plancher 18 du côté opposé aux éléments de structure métalliques et présentant chacun au moins une partie fixée à un élément de structure métallique par un élément de fixation traversant le plancher (ici des vis).

L'un des éléments de renfort 50 sert à renforcer la fixation au plancher de la structure de support 30 en deux de ses points de fixation (31 et 36) et la fixation au plancher du réservoir 40 en l'un de ses points de fixation. L'autre élément de renfort 60 sert à renforcer la fixation du réservoir 40 au plancher en un de ses points de fixation.

Tel que visible plus particulièrement sur la figure 5, l'élément de renfort 50 présente deux parties de fixation 51, 52 fixées chacune à un élément de structure métallique au travers du plancher 18, et une partie de fixation 54 fixée au plancher 18 uniquement.

Dans le mode de réalisation représenté sur les figures, l'élément de renfort 50 est une plaque réalisée d'une seule pièce en acier. Dans cet exemple, cette plaque présente une forme générale en équerre dont les extrémités forment les parties de fixation 51, 52. Dans l'exemple, chaque partie de fixation 51, 52 est percée d'un orifice pour sa fixation à l'élément de structure métallique 15 au travers du plancher 18. L'autre partie de fixation 54 est également percée d'un orifice pour sa fixation au plancher et la fixation de l'élément fonctionnel 40 au plancher.

Tel que visible figure 5, le point de fixation avant 36 de la structure de support est fixé au plancher 18 et à l'élément de structure métallique 15 au travers de l'élément de renfort 50.

L'élément de renfort 60 comporte une partie 64 fixée au plancher et à un élément de structure métallique 12 et une partie 66 fixée au plancher 18. Dans l'exemple, cette partie 66 est fixée uniquement au plancher 18. Le réservoir 40 est fixé au plancher 18 par un élément de fixation, ici une vis, traversant un orifice prévu à cet effet de la partie 66 de l'élément de renfort 60, laquelle s'étend entre le réservoir 40 et le plancher 18.

Comme pour la structure de support, les éléments de renfort 50, 60 peuvent être de préférence fixés à un élément de structure métallique en un point de fixation usuel du plancher à cet élément de structure métallique, comme représenté dans l'exemple.

## Revendications

1. Structure arrière (10) de véhicule automobile comprenant un plancher (18), un dispositif de retenue (22) de roue de secours et une structure de support (30) du dispositif de retenue, **caractérisée en ce que** cette structure de support (30) définit un cadre fixé au plancher (18) en plusieurs points de fixation (31), le dispositif de retenue de roue de secours étant fixé uniquement à la structure de support, la structure arrière présentant par ailleurs une direction longitudinale correspondant à la direction longitudinale du véhicule et dont des directions avant et arrière correspondent aux directions avant et arrière du véhicule lorsque la structure arrière est montée sur le véhicule, la structure de support (30) comportant au moins un point de fixation avant (36) au plancher situé en avant d'une partie avant du cadre suivant ladite direction longitudinale.

2. Structure arrière (10) selon la revendication 1, **caractérisée en ce que** ledit au moins un point de fixation avant (36) au plancher comprend un élément de fixation (37) s'étendant sensiblement perpendiculairement à la partie avant du cadre, cet élément de fixation (37) présentant une extrémité (37a) fixée à ladite partie avant du cadre et une autre extrémité (37b) fixée au plancher.

3. Structure arrière (10) selon la revendication 2, **caractérisée en ce que** l'élément de fixation (37) présente un élément profilé de renfort (38) s'étendant le long de l'élément de fixation entre ses extrémités et solidaire de ce dernier.

4. Structure arrière (10) de caisse selon l'une quelconque des revendications 1 à 3, **caractérisée en ce que** le plancher (18) est en matériau polymère.

5. Structure arrière (10) selon la revendication 4, **caractérisée en ce qu'**elle comprend en outre des éléments de structure métalliques (11-16) auxquels est fixé le plancher (18), la structure de support (30) étant fixée au plancher du côté opposé aux éléments de structure métalliques et **en ce qu'**en au moins un de ses points de fixation au plancher, la structure de support (30) est fixée à au moins un des éléments de structure métallique au travers du plancher.

6. Structure arrière (10) selon la revendication 5, **caractérisée en ce qu'**elle présente au moins un élément de renfort (50, 60) appliqué contre le plancher du côté opposé aux éléments de structure métalliques et présentant au moins une partie (51, 52 ; 64) fixée à un élément de structure métallique par un élément de fixation traversant le plancher.

7. Structure arrière (10) selon l'une quelconque des revendications 1 à 6, **caractérisée en ce que** la structure de support (30) est formée de profilés (32-35) reliés les uns aux autres.

8. Structure arrière (10) selon l'une quelconque des revendications 1 à 7, **caractérisée en ce qu'**elle comprend en outre un réservoir (40), notamment d'urée, fixé au plancher entre le plancher et la structure de support et **en ce qu'**une partie du réservoir s'étend à l'intérieur de la structure de support, entre le plancher et le dispositif de retenue fixé à la structure de support.

9. Véhicule automobile comprenant une structure arrière (10) selon l'une quelconque des revendications 1 à 8.

## Patentansprüche

1. Heckstruktur (10) eines Kraftfahrzeugs, umfassend einen Boden (18), eine Vorrichtung (22) zum Halten eines Reserverads und eine Struktur (30) zum Stützen der Haltevorrichtung, **dadurch gekennzeichnet, dass** diese Stützstruktur (30) einen Rahmen definiert, der an mehreren Befestigungspunkten (31) am Boden (18) befestigt ist, wobei die Reserveradhaltevorrichtung nur an der Stützstruktur befestigt ist, wobei die Heckstruktur ferner eine Längsrichtung aufweist, die der Längsrichtung des Fahrzeugs entspricht, und wobei ihre Vorwärts- und Rückwärtsrichtung der Vorwärts- und Rückwärtsrichtung des Fahrzeugs entsprechen, wenn die Heckstruktur am Fahrzeug montiert ist, wobei die Stützstruktur (30) mindestens einen vorderen Bodenbefestigungspunkt (36) aufweist, der sich in der Längsrichtung vor einem vorderen Teil des Rahmens befindet.

2. Heckstruktur (10) nach Anspruch 1, **dadurch gekennzeichnet, dass** der mindestens eine vordere Bodenbefestigungspunkt (36) ein Befestigungselement (37) umfasst, das sich im Wesentlichen senkrecht zum vorderen Teil des Rahmens erstreckt, wobei das Befestigungselement (37) ein am vorderen Teil des Rahmens befestigtes Ende (37a) und ein am Boden befestigtes anderes Ende (37b) aufweist.

3. Heckstruktur (10) nach Anspruch 2, **dadurch gekennzeichnet, dass** das Befestigungselement (37) ein Verstärkungsprofilelement (38) aufweist, das sich entlang des Befestigungselements zwischen seinen Enden erstreckt und fest mit diesem verbunden ist.

4. Heckkarosseriestruktur (10) nach einem der Ansprüche 1 bis 3, **dadurch gekennzeichnet, dass** der Boden (18) aus Polymermaterial ist.

5. Heckstruktur (10) nach Anspruch 4, **dadurch gekennzeichnet, dass** sie ferner Metallstrukturelemente (11 - 16) umfasst, an denen der Boden (18) befestigt ist, wobei die Stützstruktur (30) auf der den Metallstrukturelementen gegenüberliegenden Seite am Boden befestigt ist, und dass die Stützstruktur (30) an mindestens einem ihrer Bodenbefestigungspunkte durch den Boden hindurch an mindestens einem der Metallstrukturelemente befestigt ist.

6. Heckstruktur (10) nach Anspruch 5, **dadurch gekennzeichnet, dass** sie mindestens ein Verstärkungselement (50, 60) aufweist, das auf der den Metallstrukturelementen gegenüberliegenden Seite gegen den Boden anliegt und mindestens einen Teil (51, 52; 64) aufweist, der durch ein den Boden durchquerendes Befestigungselement an einem Metallstrukturelement befestigt ist.

7. Heckstruktur (10) nach einem der Ansprüche 1 bis 6, **dadurch gekennzeichnet, dass** die Stützstruktur (30) aus miteinander verbundenen Profilen (32 - 35) ausgebildet ist.

8. Heckstruktur (10) nach einem der Ansprüche 1 bis 7, **dadurch gekennzeichnet, dass** sie ferner einen Behälter (40), insbesondere für Harnstoff, umfasst, der zwischen dem Boden und der Stützstruktur am Boden befestigt ist, und dass sich ein Teil des Behälters innerhalb der Stützstruktur zwischen dem Boden und der an der Stützstruktur befestigten Haltevorrichtung erstreckt.

9. Fahrzeug, umfassend eine Heckstruktur (10) nach einem der Ansprüche 1 bis 8.

## Claims

1. Rear structure (10) of a motor vehicle comprising a floor (18), a spare-wheel retainer (22) and a retainer support structure (30), **characterized in that** this support structure (30) defines a frame attached to the floor (18) at a plurality of attachment points (31), the spare-wheel retainer being attached only to the support structure, the rear structure further having a longitudinal direction corresponding to the longitudinal direction of the vehicle and having front and rear directions corresponding to the front and rear directions of the vehicle when the rear structure is mounted on the vehicle, the support structure (30) comprising at least one front floor-attachment point (36) located in front of a front part of the frame in said longitudinal direction.

2. Rear structure (10) according to Claim 1, **characterized in that** said at least one front floor-attachment point (36) comprises an attachment element (37) extending substantially perpendicular to the front part of the frame, this attachment element (37) having one end (37a) attached to said front part of the frame and another end (37b) attached to the floor.

3. Rear structure (10) according to Claim 2, **characterized in that** the attachment element (37) has a reinforcing profile element (38) extending along the attachment element between its ends and secured to the latter element.

4. Rear body structure (10) according to any one of Claims 1 to 3, **characterized in that** the floor (18) is made of polymer material.

5. Rear structure (10) according to Claim 4, **characterized in that** it further comprises metal structural elements (11-16) to which the floor (18) is attached, the support structure (30) being attached to the floor on the opposite side to the metal structural elements, and **in that**, at at least one of its floor-attachment points, the support structure (30) is attached through the floor to at least one of the metal structural elements.

6. Rear structure (10) according to Claim 5, **characterized in that** it has at least one reinforcing element (50, 60) which presses against the floor on the opposite side to the metal structural elements and has at least one part (51, 52; 64) attached to a metal structural element by an attachment element that passes through the floor.

7. Rear structure (10) according to any one of Claims 1 to 6, **characterized in that** the support structure (30) is formed of profiles (32-35) connected to one another.

8. Rear structure (10) according to any one of Claims 1 to 7, **characterized in that** it further comprises a tank (40), in notably a urea tank, attached to the floor between the floor and the support structure and **in that** a part of the tank extends inside the support structure, between the floor and the retainer attached to the support structure.

9. Motor vehicle comprising a rear structure (10) according to any one of Claims 1 to 8.
